# EUROPÄISCHE PATENTANMELDUNG

(11) **EP 1 206 057 A1**
(43) Veröffentlichungstag der Anmeldung: **15.05.2002**
(21) Anmeldenummer: 01125067.7
(22) Anmeldetag: 22.10.2001
(51) Int. Cl.: H04B 10/17, H01S 3/30

(54) **Verfahren zur Verstärkung von optischen Signalen**

(30) Priorität: 14.11.2000 DE 10056327
(71) Anmelder: SIEMENS AKTIENGESELLSCHAFT, 80333 München (DE)
(72) Erfinder: Krummrich, Peter, Dr., 81379 München (DE)

(57) **Zusammenfassung**

Bei der Verstärkung von optischen Signalen (os), die über ein optisches Übertragungsmedium (OF) übertragen werden, wird mindestens ein optisches Pumpsignal (rpsl bis rps8, osps) zur Erzeugung des Raman-Effekts in Übertragungsrichtung (UR) in das optische Übertragungsmedium (OF) eingekoppelt. Hierbei wird die den optischen Signalwellenlängenbereich betreffende spektrale Leistungsdichte des mindestens einen optischen Pumpsignals (rpsl bis rps8, osps) durch mindestens eine Filtereinheit derart reduziert, daß die verbleibende spektrale Leistungsdichte unter der Schrotrauschgrenze liegt.

## Beschreibung

Die Erfindung betrifft ein Verfahren zur Verstärkung von optischen Signalen, die über ein optisches Übertragungsmedium übertragen werden, wobei mindestens ein optisches Pumpsignal zur Erzeugung des Raman-Effekts in Übertragungsrichtung in das optische Übertragungsmedium eingekoppelt wird.

In bestehenden zukünftigen optischen Übertragungssystemen, insbesondere nach dem WDM-Prinzip (Wavelength-Divison-Multiplexing) arbeitenden optischen Übertragungssystemen, werden optische Pumpsignale von einer Pumpquelle beispielsweise in eine optische Einmoden-Faser ko- oder kontradirektional eingekoppelt, um dem Einkoppelort vor- oder nachgelagerte optische Verstärker mit der erforderlichen optischen Pumpleistung zu versorgen. Entsprechend werden derartige optische Pumpsignale zur direkten Verstärkung von zu übertragenden optischen Signalen benutzt, wobei die durch die optischen Pumpsignale erzeugte optische Verstärkung auf dem Raman-Effekt basiert. Der Raman-Effekt bzw. die stimulierte Raman-Streuung ist beispielsweise in Godwin P. Agrawal "Non-linear Fiber Optics", Second Edition, 1995 auf den Seiten 329 bis 334 beschrieben.

Des Weiteren sind Konzepte der verteilten Raman-Verstärkung in der optischen Übertragungsfaser bekannt, welche eine deutliche Verbesserung der Übertragungseigenschaften des optischen Übertragungssystems durch eine Verteilung der Verstärkungspunkte über einen Teil oder die gesamte optische Übertragungsstrecke ermöglichen. Beispielsweise kann durch den Einsatz der verteilten Raman-Verstärkungstechnik am Faserende bzw. am Ende des Übertragungsstreckenabschnitts ein verbesserter und über die WDM-Kanäle konstanter optischer Signal-Rausch-Abstand (Optical Signal to Noise Ratio - OSNR) realisiert werden, wodurch die regenerationsfrei überbrückbare Länge der optischen Übertragungsstreckenabschnitte vergrößert werden kann sowie mehr optische Übertragungsstreckenabschnitte überbrückt werden können.

In optischen Übertragungssystemen mit bidirektionaler Datenübertragung in den optischen Übertragungsfasern werden zur Ausnutzung der Signal-zu-Rausch-Abstands-Verbesserung sowohl am Fasereingang als auch am Faserausgang Raman-Pumpquellen zur Erzeugung der für die verteilte Ramann-Verstärkung vorzusehenden Pumpsignale eingesetzt. Mit Hilfe der beschriebenen Raman-Pumpquellen werden die an den jeweiligen Faserenden ankommenden WDM-Kanäle kontradirektional gepumpt und hierdurch die Signalpegel der zu verstärkenden optischen WDM-Übertragungssignale in der Übertragungsfaser vor dem Erreichen des jeweiligen Endes der optischen Übertragungsstrecke angehoben, woraus die beschriebene Verbesserung des Signalzu-Rausch-Abstandes des jeweiligen optischen WDM-Übertragungssignals resultiert. Gleichzeitig werden durch die jeweilige Raman-Pumpquelle bei bidirektionalem Betrieb der optischen Übertragungsfaser die jeweils am Faserende zusätzlich eingekoppelten kodirektionalen WDM-Kanäle gepumpt. Dieses zusätzliche kodirektionale Pumpen der in der gleichen Übertragungsrichtung übertragenen WDM-Kanäle bzw. optischen WDM-Übertragungssignale kann zu einer Verschlechterung der Signalqualität der in der optischen Übertragungsfaser übertragenen optischen WDM-Kanälen bzw. WDM-Signalen führen, wodurch eine Verschlechterung der Übertragungsqualität des kompletten optischen Übertragungssystems hervorgerufen wird.

Durch das Überkoppeln des Intensitätsrauschens der optischen Pumpstrahlung in die optischen WDM-Kanäle innerhalb der optischen Übertragungsfaser wird die Signalqualität der WDM-Kanäle insbesonder bei einer kodirektional gepumpten Raman-Verstärkeranordnung verschlechtert. Da der bei der kodirektional gepumpten Raman-Verstärkeranordnung ausgenutzte Effekt der stimulierten Raman-Streuung mit Zeitkonstanten im Femto-Sekundenbereich realisiert wird, wird durch eine Modulation der optischen Pumpstrahlung im gesamten Signalfrequenzbereich ein unmittelbares Überkoppeln des Intensitätsrauschens der optischen Pumpstrahlung auf die Signalstrahlung hervorgerufen.

Des weiteren kann eine in Sättigung betriebene kodirektional gepumpte Raman-Verstärkerordnung zu bitmusterabhängigen Überkoppeln zwischen den optischen WDM-Signalen führen. Bei entsprechend hohen Eingangspegeln bzw. einem hohen Gewinn des optischen Raman-Verstärkers besteht eine Abhängigkeit der Dämpfung der Pumpstrahlung pro optischer Übertragungsfaserlänge von der Intensität der Signalstrahlung. Wird durch sämtliche WDM-Kanäle bzw. WDM-Signale in einem betrachteten Zeitintervall bei binärer Intensitätsmodulation eine logische "1" übertragen, so wird die Pumpstrahlung stärker gedämpft als bei einer Übertragung einer logischen "1" in nur einem einzigen WDM-Kanal bzw. WDM-Signal. Eine verstärkte Dämpfung der optischen Pumpstrahlung führt zu einer geringeren Verstärkung mit Hilfe des optischen Raman-Verstärkers. Somit wird eine logische "1" eines gegebenen WDM-Kanals bzw. WDM-Signals schwächer verstärkt, unter Voraussetzung das viele weitere WDM-Kanäle bzw. WDM-Signale innerhalb desselben Zeitintervalls ebenfalls eine binäre "1" aufweisen, wodurch eine bitmusterabhängige Intensitätsmodulation der WDM-Kanäle bzw. WDM-Signale hervorgerufen wird. Zur Vermeidung eines derartigen bitmusterabhängigen Übersprechens sollte die optische Raman-Verstärkeranordnung unterhalb ihrer Sättigungsgrenze betrieben werden.

Zusätzlich wird durch die optischen Pumpsignalquellen der optischen Raman-Verstärkeranordnung neben der kohärenten Strahlung bei der Wellenlänge des optischen Pumpsignals inkohärente Spektralanteile generiert, die sich über einen sehr weiten Wellenlängenbereich verteilen können. Derartige inkohärente Spektralanteile der optischen Pumpsignale entstehen durch eine spontane Emission des Laserübergangs der jeweiligen optischen Pumpquelle, wobei ein Teil der spontan emittierten optischen Strahlung den Signalwellenlängenbereich betreffen kann. Wird diese spontan emittierte Strahlung in die optische Übertragungsfaser und somit in den Wellenlängenbereich des optischen WDM-Übertragungssignals eingekoppelt, so überlagert sich diese dort mit der verstärkten spontanen Emission der optischen Raman-Verstärkeranordnung. Ähnlich der spontanen Emission der optischen Raman-Verstärkeranordnung wird sich die durch die optischen Pumpsignale hervorgerufene spontane Emission in der verstärkenden Faser mit dem optischen WDM-Übertragungssignal mischen, wodurch neue Rauschanteile generiert und dem optischen Übertragungssignal hinzugefügt werden. Eine derartige Überlagerung in der optischen Übertragungsfaser wird insbesondere dann stattfinden, wenn die optische Raman-Verstärkeranordnung kodirektional gepumpt wird. Hierdurch ergibt sich ein Bedarf an optischen Raman-Pumpsignalquellen für kodirektionales Pumpen im optischen Signalwellenbereich, deren optische Pumpsignale eine sehr geringe spontane Emission generieren bzw. diese in das optische WDM-Übertragungssignal überkoppeln. Derartige Anforderungen an die optischen Pumpsignalquellen wurden bei der Auslegung bisher bekannter Raman-Verstärkeranordnungen nicht berücksichtigt, da diese üblicherweise nur für das kontrodirektionale Pumpen von optischen WDM-Übertragungssignalen ausgelegt sind.

Die der Erfindung zugrunde liegende Aufgabe besteht darin, ein Verfahren zur Verstärkung von optischen Signalen unter Ausnützung des Raman-Effektes anzugeben, bei dem die Signalqualität des zur Erzeugung des Raman-Effektes erforderlichen mindestens einen optischen Pumpsignals verbessert wird. Die Aufgabe wird ausgehend von einem Verfahren gemäß den Merkmalen des Oberbegriffes des Patentanspruches 1 durch die Merkmale des kennzeichnenden Teils gelöst.

Der wesentliche Aspekt des erfindungsgemäßen Verfahrens ist darin zu sehen, daß die den optischen Signalwellenlängenbereich betreffende spektrale Leistungsdichte des mindestens einen optischen Pumpsignals durch mindestens eine Filtereinheit derart reduziert wird, daß die verbleibende spektrale Leistungsdichte unter der Schrotrauschgrenze liegt. Vorteilhaft wird durch die Reduzierung der im optischen Raman-Pumpssignal enthaltenen inkohärenten Spektralanteile eine Überlagerung dieser inkohärenten Spektralanteile mit dem optischen Übertragungssignal verhindert, wodurch eine Verringerung der Signalqualität des optischen Übertragungssignals vermieden werden kann. Eine Absenkung der betrachteten spektralen Leistungsdichte der optischen Ramanpumpsignale bei der Wellenlänge des optischen Übertragungssignals unter die Schrotrauschgrenze, d.h. eine spektrale Leistungsdichte von - 58 dBm bezogen auf 0,1 nm, ist ausreichen dafür, daß die durch die Raman-Pumpquellen generierte spontante Emission gegenüber der durch die optische Raman-Verstäkeranordnung im Signalpfad generierte spontane Emission vernachlässigbar ist.

Vorteilhaft wird die spektrale Leistungsdichte des mindestens einen optischen Pumpsignals durch mindestens eine Filtereinheit vor oder bei der Einkopplung in das optische Übertragungsmedium reduziert. Erfindungsgemäß wird mindestens eine optische Filtereinheit zur Reduzierung der spektralen Leistungsanteile des oder der optischen Raman-Pumpsignale vorgesehen, durch dessen Einfügedämpfung die beispielsweise im Signalwellenlängenbereich von 1400 bis 1610 nm liegenden inkohärenten Spektralanteile des optischen Raman-Pumpsignals so stark dämpft, daß diese unterhalb der Schrotrauchgrenze liegen.

Zusätzliche vorteilhafte Ausgestaltungen des erfindungsgemäßen Verfahrens sind den weiteren Ansprüchen zu entnehmen.

Die Erfindung soll im folgenden durch Ausführungsbeispiele anhand mehrerer Prinzipschaltbilder näher erläutert werden.
- Figur 1: zeigt beispielhaft den prinzipiellen Aufbau einer erfindungsgemäßen Raman-Verstärkeranordnung mit einer Filtereinheit,
- Figur 2: zeigt beispielhaft den prinzipiellen Aufbau einer alternativen erfindungsgemäßen Raman-Verstärkeranordnung mit mehreren Filtereinheiten und
- Figur 3: zeigt beispielhaft den prinzipiellen Aufbau einer weiteren erfindungsgemäßen Raman-Verstärkeranordnung mit einer kombinierten optischen Koppel- und Filtereinheit.

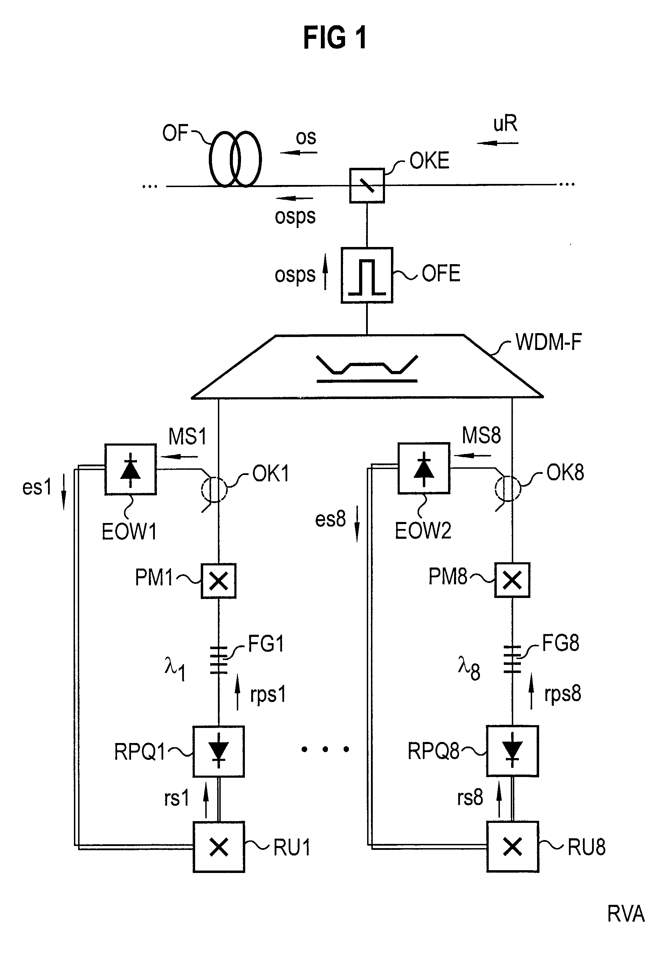

In Figur 1 ist beispielsweise eine Raman-Verstärkeranordnung RVA dargestellt, die eine optische Übertragungsfaser OF, eine optische Koppeleinheit OKE, eine optische Filtereinheit OFE und eine WDM-Frequenzweiche WDM-F aufweist. An die WDM-Frequenzweiche WDM-F sind acht Raman-Pumpquellen RPQ1 bis RPQ8 zur Ereugung von acht optischen Ramanpumpsignalen rps1 bis rps8 angeschlossen. Jede der acht Raman-Pumquellen RPQ1 bis RPQ8 ist über ein Fasergitter FG1 bis FG8 sowie einen Polarisationsmischer PM1 bis PM8 und einen optischen Koppler OK1 bis OK8 an einen Eingang der WDM-Frequenzweiche WDM-F angeschlossen. Die ersten bis achten optischen Koppler OK1 bis OK8 sind an erste bis achte elektro-optische Wandlereinheiten EOW1 bis EOW8 angeschlossen, deren Ausgang jeweils an eine ersten bis achte Regeleinheit RU1,RU8 geführt ist. Die erste bis achte Regeleinheit RU1 bis RU8 ist zur Regelung der zugeordneten ersten bis achten Raman-Pumpquellen RPQ1 bis RPQ8 an diese angeschlossen.

In Figur 1 sind beispielhaft nur eine erste und achte Raman-Pumpquelle RPQ1,RPQ8 und das zugehörigen erste und achte Fasergitter FG1 ,FG8, der erste und achte Polaristionsmischer PM1,PM8, ein erster und achter optischer Koppler OK1,OK8 sowie eine erste und achte elektro-optische Wandlereinheit EOW1, EOW8 dargestellt und die weiteren Raman-Pumpquellenanordnungen durch eine punktierte Linie angedeutet.

Mit Hilfe der ein bis achten Raman-Pumpquelle RPQ1 - RQ8 werden ein bis achte , jeweils eine unterschiedliche ,ein bis achte Wellenänge λ1 - λ8 aufweisende optische Raman-Pumpsignale rps1 - rps8 erzeugt. Beispielhaft wird die Erzeugung und Stabilisierung der ersten bis achten optischen Raman-Pumpsignale rps1 - rps8 anhand des ersten optischen Raman-Pumpsignals rps1 erläutert. Die erste Wellenlängen λ1 des ersten optischen Raman-Pumpsignals rps1 wird durch das erste Fasergitter FG1 stabilisiert. Anschließend wird das erste optische Raman-Pumpsignal rps1 an den ersten Polarisationsmischer PM1 übertragen, der für eine "Verwürfelung" der Polarisation des ersten optischen Raman-Pumpsignals rps1 vorgesehen ist. Das derart aufbereitete und stabilisierte erste optische Raman-Pumpsignal rps1 wird über den ersten optischen Koppler OK1 an einen Eingang der WDM-Frequenzweiche WDM-F übermittelt. Mit Hilfe des ersten optischen Kopplers OK1 wird ein erstes Meßsignal MS1 aus dem ersten optischen Raman-Pumsignals rps1 ausgekoppelt und der ersten elektro-optischen Wandlereinheit EOB1 zugeführt. Ein derartiger erster optischer Koppler OK1 kann beispielsweise als optischer Faserkoppler mit einem Koppelverhältnis von beispielsweise 2 % zu 98 % ausgestaltet sein. Somit wird nur ein geringer Teil des ersten optischen Raman-Pumpsignals rps1 als erstes Meßsignal MS1 ausgekoppelt, wohingegen das verbleibende erste optische Raman-Pumpsignal rps1 an die WDM-Frequenzweiche WDM-F über die optische Filtereinheit OFE und die optische Koppeleinheit in die optische Faser OF eingekoppelt wird.

Mit Hilfe des ersten elektro-optischen Wandlers EOW1 wird ein erstes elektrisches Signal es1 erzeugt, das der ersten Reglereinheit RU1 zugeführt wird, in der aus dem ersten elektrischen Signal es1 ein erstes Regelsignal rs1 gebildet wird. Das erste Regelsignal rs1 wird anschließend an die erste Raman-Pumpquelle übermittelt. Mit Hilfe des ersten Regelsignals rs1 werden die Injektionsströme der Laserdioden der ersten Raman-Pumpquelle RPQ1 derart gesteuert, daß die Leistungen des ersten optischen Raman-Pumpsignals rps1 vor der Zuführung an die WDM-Frequenzweiche WDM-F einen konstanten Leistungswert aufweist.

Analog hierzu werden das zweite bis achte optische Raman-Pumpsignal rps2 bis rps8 erzeugt und auf konstante Leistung geregelt. Die ersten bis achten optischen Raman-Pumpsignale rps1 - rps8 werden mit Hilfe der WDM-Frequenzweiche WDM-F zu einem optischen Summenpumpsignal osps zusammengefaßt, welches an die erfindungsgemäße optische Filtereinheit OFE übertragen wird. In der optischen Filtereinheit OFE wird erfindungsgemäß die den Signalwellenlängenbereich betreffende spektrale Leistungsdichte des optischen Summenpumpsignals osps derart stark reduziert, daß die betrachtete spektrale Leistungsdichte des optischen Summenpumpsignals osps unterhalb der Schrotrauschgrenze zu liegen kommt. Eine Absenkung dieser spektralen Leistungsdichte unter die Schrotrauschgrenze, d.h. unter eine Leistung von - 58 dbm bezogen auf 0,1 nm, reicht aus, daß die von den ersten bis achten Raman-Pumpquellen RPQ1 bis RPQ8 generierte spontane Emission im Signalwellenlängenbereich gegenüber der von den optischen Verstärkern auf der optischen Übertragungsstrecke generierten spontanen Emission vernachlässigbar wird. Das derart gefilterte optische Summenpumpssignal osps wird über die optischen Koppeleinheit OKE, beispielsweise eine optische Bandweiche, in Übertragungsrichtung UR des optischen Übertragungssignals os in die optische Faser bzw. die optische Übertragungsfaser OF eingekoppelt. Hierdurch wird die Raman-Verstärkeranordnung RVA durch die in der ersten bis achten Raman-Pumpquelle RPQ1 - RPQ8 erzeugten ersten bis achten optischen Raman-Pumpsignale rps1 bis rps8 kodirektional gepumpt und somit eine Raman-Verstärkung des optischen Übertragungssignals os in der optischen Übertragungsfaser OF bewirkt.

Gemäß der Erfindung wird durch die Filterung des optischen Summenpumpsignals osps bzw. durch die Reduzierung der spektralen Leistungsdichte des optischen Summenpumpsignals osps im Signalwellenlängenbereich des optischen Übertragungssignals os die durch die spontane Emission des Laserübergangs generierte inkohärente Strahlung des ersten bis achten optischen Raman-Pumpsignals rps1 - rps8 unterdrückt bzw. gedämpft. Die optische Filtereinheit OFE kann hierzu beispielsweise als Bandpaßfilter oder als Bandsperrenfilter realisiert sein, wobei die Einfügedämpfung der optischen Filtereinheit OFE zwischen der WDM-Frequenzweiche WDM-F und der optischen Kopplereinheit OKE im Bereich der Pumpwellenlänge (1.400 - 1.550 nm) ca. 0,5 - 1 dB und bei allen anderen Wellenlängen bzw. speziell im Bereich der Signalwellenlängen (1.530 - 1.610 nm) eine Einfügedämpfung von deutlich über 20 dB beträgt.

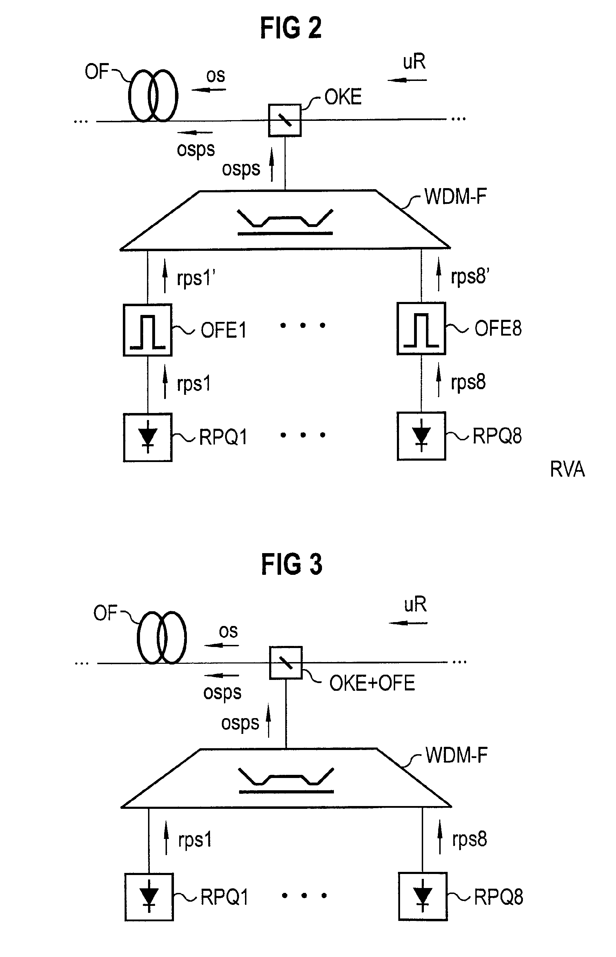

In Figur 2 ist beispielhaft eine weitere Ausgestaltung der erfindungsgemäßen Raman-Verstärkeranordnung RVA dargestellt, wobei diese im Gegensatz zu Figur 1 eine weitere Alternative zur Anordnung der erfindungsgemäßen Filtereinheit OFE zur Reduzierung der den optischen Signalwellenbereich betreffenden spektralen Leistungsdichte des mindestens einen optischen Pumpsignals rps1 - rps8 aufzeigt. Hierzu wurde bildlich gesprochen die in Figur 1 dargestellte optische Filtereinheit OFE über die WDM-Frequenzweiche WDM-F in die einzelnen Pumpsignalerzeugungspfade geschoben, so daß nun für jeden einzelnen Pumsignalerzeugungspfad eine eigene optische Filtereinheit OFE1 - OFE8 vorgesehen ist. Mit Hilfe dieser ersten bis achten optischen Filtereinheiten OFE1 - OFE8 wird eine getrennte Filterung bzw. Reduzierung der den Signalwellenlängenbereich von beispielsweise ca. 1400 bis 1610 nm betreffenden spektralen Leistungsdichte des ersten bis achten optischen Raman-Pumpsignals rps1 - rps8 durchgeführt. Hierzu ist beispielsweise die erste Raman-Pumpquelle RPQ1 über die erste optische Filtereinheit OFE mit der WDM-Frequenzweiche WDM-F und die achte Raman-Pumpquelle RPQ8 über die achte optische Filtereinheit OFE mit der WDM-Frequenzweiche WDM-F verbunden. Analog sind die zweite bis siebte optische Filtereinheiten OFE2 bis OFE8 mit der WDM-Frequenzweiche WDM-F verbunden, wobei diese in Figur 2 nicht explizit dargestellt sind, sondern mit Hilfe einer punktierten Linie angedeutet sind.

Die gefilterten ersten bis achten optischen Raman-Pumpsignale rps1 - rps8 werden analog zu dem in Figur 1 dargestellten Verfahren an die WDM-Frequenzweiche WDM-F übermittelt und von dieser zu einem optischen Summenpumpsignal osps zusammengefaßt, das an die optische Koppeleinheit OKE übermittelt wird. Mit Hilfe der optischen Koppeleinheit OKE wird das optische Summenpumpsignal osps in die optische Übertragungsfaser OF in Übertragungsrichtung UR des optischen Übertragungssignals os eingekoppelt.

Die in Figur 1 dargestellte Leistungsregelung der ersten bis achten Ramanpumpquelle RPQ1 - RPQ8 ist in Figur 2 nicht explizit dargestellt, ähnlich wie die ersten bis achten Fasergitter FG1 - FG8 und die ersten bis achten Polarisationsmischer PM1 - PM8.

In dem in Figur 3 dargestellten Ausführungsbeispiel ist eine alternative Realisierung der erfindungsgemäßen Verstärkung von optischen Signalen dargestellt, bei der die erfindungsgemäße Reduzierung des den optischen Signalwellenlängenbereich betreffenden spektralen Leistungsanteil des mindestens einen optischen Pumpsignals rps1 - rps8 mit Hilfe einer kombinierten optischen Koppel- und Filtereinheit OKE+OFE durchgeführt wird. Die dargestellte kombinierte optische Koppel- und Filtereinheit OKE+OFE weist neben der optischen Koppelfunktion eine optische Filterfunktion auf, durch die das von der WDM-Frequenzweiche WDM-F erzeugte optische Summenpumpsignal osps zunächst gefiltert und anschließend in die optische Übertragungsfaser OF in Übertragungsrichtung UR des optischen Übertragungssignals os eingekoppelt wird. Das erste bis achte optische Raman-Pumpsignal rps1 bis rps8 werden analog zu dem in Figur 1 oder Figur 2 vorgestellten Verfahren in einer ersten bis achten Raman-Pumpquelle RPQ1 bis RPQ8 erzeugt sowie an die WDM-Frequenzweiche WDM-F übertragen. Analog zu Figur 2 ist in Figur 3 nur die erste und achte Raman-Pumpquelle RPQ1, RPQ8 dargestellt, wobei die zweite bis siebte Raman-Pumpquelle RPQ2 bis RPQ7 durch eine punktierte Linie angedeutet sind.

Die in Figur 3 dargestellte kombinierte optische Koppel- und Filtereinheit OKE+OFE kann auch als optische Bandweiche mit optischer Filterfunktion ausgestaltet sein, wobei die entahaltene Filtereinheit eine Einfügedämpfung im Pumpwellenbereich kleiner als 1 dB und im Signalwellenlängenbereich größer als 25 dB aufweist. Die in Figur 3 dargestellte optische kombinierte Koppel- und Filtereinheit OKE+OFE koppelt somit nur Spektralanteile im Pumpwellenlängenbereich stark in den Signalpfad bzw. die optische Übertragungsfaser OF über. Die in den Signalwellenlängenbereich fallenden, spontan emittierten Leistungsanteile aller Raman-Pumpsignale rps1 bis rps8 bzw. des gesamten optischen Summenpumpsignals osps werden nur schwach übergekoppelt, so daß diese spektrale Leistungsdichte unterhalb des Schrotrauschens liegt.

Beispielsweise weist das erste optische Raman-Pumpsignals RPS1 vor der optischen Filtereinheit OFE eine Ausgangsleistung von beispielsweise 23 dbm bezogen auf 0,1 nm auf. Der Abstand der Laserlinie zur spontanen Emission beträgt 60 dB bezogen auf 0,1 nm, d.h. vor der optischen Filtereinheit OFE hat die spontane Emission im Signalwellenlängenbereich eine spektrale Leistungsdichte von ca. - 37 dBm bezogen auf 0,1 nm. Durch die optische Filtereinheit OFE wird die spektrale Leistungsdichte des ersten optischen Raman-Pumpsignals rps1 beispielsweise auf - 62 dBm bezogen auf 0,1 nm und somit unter die Schrotrauschgrenze abgesenkt. Hierdurch kann das störende Überkoppeln der kohärenten Strahlungsanteile, die den Signalwellenlängenbereich betreffen, innerhalb des optischen Übertragungssystems vermieden werden.

## Patentansprüche

1. Verfahren zur Verstärkung von optischen Signalen (os), die über ein optisches Übertragungsmedium (OF) übertragen werden, wobei mindestens ein optisches Pumpsignal (rps1 bis rps8, osps) zur Erzeugung des Raman-Effekts in Übertragungsrichtung (UR) in das optische Übertragungsmedium (OF) eingekoppelt wird,
**dadurch gekennzeichnet,**
**daß** die den optischen Signalwellenlängenbereich betreffende spektrale Leistungsdichte des mindestens einen optischen Pumpsignals (rps1 bis rps2, osps) durch mindestens eine Filtereinheit (OFE, OFE1 bis OFE8) derart reduziert wird, daß dessen verbleibende spektrale Leistungsdichte unter der Schrotrauschgrenze liegt.

2. Verfahren nach Anspruch 1,
**dadurch gekennzeichnet,**
**daß** die spektrale Leistungsdichte des mindestens einen optischen Pumpsignals (rps1 bis rps2, osps) durch mindestens eine Filtereinheit (OFE, OFE1 bis OFE8) vor oder bei der Einkopplung in das optische Übertragungsmedium reduziert wird.

3. Verfahren nach Anspruch 1,
**dadurch gekennzeichnet,**
**daß** bei mehreren optischen Pumpsignalen (rps1 bis rps2) jeweils die den optischen Signalwellenlängenbereich betreffende spektrale Leistungsdichte jedes einzelnen optischen Signals (rps1 bis rps2) mit Hilfe jeweils einer Filtereinheit (OFE1 bis OFE8)) reduziert und diese vor dem Einkoppeln in das optische Übertragungsmedium (OF) zu einem optischen Summenpumpsignal (osps) zusammengefaßt werden.

4. Verfahren nach Anspruch 1 oder 2,
**dadurch gekennzeichnet,**
**daß** mehrere optische Pumpsignale (rps1 bis rps2) zu einem optischen Summenpumpsignal (osps) zusammengefaßt werden und die den optischen Signalwellenlängenbereich betreffende spektrale Leistungsdichte des optischen Summenpumpsignals (osps) mit Hilfe einer Filtereinheit (OFE) reduziert wird.

5. Verfahren nach Anspruch 4,
**dadurch gekennzeichnet,**
**daß** die den optischen Signalwellenlängenbereich betreffende spektrale Leistungsdichte des optischen Summenpumpsignals (osps) mit Hilfe einer diese Filtereinheit aufweisenden optischen Bandweiche (OKE+OFE) beim Einkoppeln in das optische Übertragungsmedium (OF) reduziert wird.

6. Verfahren nach einem der Ansprüche 1 bis 5,
**dadurch gekennzeichnet,**
**daß** durch die mindestens eine Filtereinheit (OFE, OFE1 bis OFE8) das mindestens eine optische Pumpsignal (rps1 bis rps8) bzw. das optische Summenpumpsignal (osps) im Pumpwellenlängenbereich um weniger als 1 dB und im Signalwellenlängenbereich um mehr als 25 dB gedämpft wird.
